# EUROPEAN PATENT APPLICATION

(11) **EP 1 909 081 A1**
(43) Date of publication of application: **09.04.2008**
(21) Application number: 07019332.1
(22) Date of filing: 02.10.2007
(51) Int. Cl.: G01K 7/02, G01K 17/00, G01N 25/48

(54) **Sensor unit of thermal analysis equipment and method of manufacturing the same**

(30) Priority: 03.10.2006 JP 2006272175
(71) Applicant: Rigaku Corporation, Akishima-shi, Tokyo 196-8666 (JP)
(72) Inventor: Tanaka, Nobuhiro, Akishima-shi Tokyo 196-8666 (JP); Otake, Satoshi, Akishima-shi Tokyo 196-8666 (JP); Takata, Yoshihiro, Akishima-shi Tokyo 196-8666 (JP)
(74) Representative: HOFFMANN EITLE

(57) **Abstract**

There are provided a sensor unit of thermal analysis equipment capable of keeping heat conduction between a furnace body and samples to detect a temperature difference between the samples with high sensitivity, while suppressing the heat conduction between a measurement sample and a reference sample, and a method of manufacturing the same. According to the present invention, a sensor unit 30 of a thermal analysis equipment 1 that detects a temperature difference between a measurement sample S and a reference sample R in each sample container, includes: a base part 31 formed of an insulator and provided in the vicinity of a temperature-controlled furnace unit; a multiple thermocouple 32 formed by joining two kinds of thermocouple elements alternately, a particular part of the thermocouple element being joined to the base part; and a pair of heat sensitive parts 35, 36 formed of an insulator, having a mounting surface on which each sample container is mounted, and joining to element junctions of the multiple thermocouple, wherein the pair of heat sensitive parts 35, 36 are provided spaced apart from the base part 31.

## Description

### BACKGROUND OF THE INVENTION

### Field of the Invention

The present invention relates to a sensor unit of thermal analysis equipment for detecting a temperature difference between a measurement sample and a reference sample, and a method of manufacturing the same.

### Description of the Related Art

Conventionally, a temperature difference sensor with a pair of thermocouples is generally used in thermal analysis equipment, such as DTA (Differential Thermal Analyzer) and DSC (Differential Scanning Calorimeter). Such a temperature difference sensor detects the temperature of a measurement sample and the temperature of a reference sample by means of each thermocouple, respectively, and outputs the temperature difference. In thermal analysis equipment, a metal such as constantan, which is excellent in thermal conductivity and will not react with thermocouple materials even at high temperatures, is usually used for each mounting plate for mounting a sample container, and the element junction of a thermocouple is connected to each mounting plate (see JP-A-H05-223764).

On the other hand, as a temperature difference sensor with high sensitivity, a temperature difference sensor using a multiple thermocouple, in which the elements of the thermocouple are connected in series, is proposed. In the case of using the multiple thermocouple, an insulating mounting plate is used in order to prevent a short circuit of each element junction (see US5033866 and JP-A-2005-134397).

For example, the thermoanalytical sensor of JP-A-2005-134397 includes: a thermocouple arrangement made by serially connecting thermocouple columns composed of two different thermocouple materials; and an insulating layer overlaid on the thermocouple arrangement, in a measurement position on a ceramic substrate. In this thermoanalytical sensor, the thermocouple and the insulating layer are stacked on the substrate, and sample containers are placed at positions apart from each other on top of the insulating layer, thereby detecting the sample temperature. The heat from a furnace body will transmit to the samples via the substrate, thermocouple, and insulating layer. Moreover, a temperature change, when there is a heat generation or a heat absorption by the sample, is detected at the element junction of the thermocouple via the insulating layer.

However, in the above-described sensor, the sample containers are just placed at positions apart from each other on the insulating layer, and therefore a sufficient thermal resistance is not formed between the measurement sample and the reference sample. For this reason, even if there is a change in the measurement sample, a sufficient temperature gradient will not occur between the samples, thus decreasing the sensor sensitivity. Since an insufficient thermal resistance affects the measurement sensitivity in this manner, a temperature change in the sample can not be detected with high sensitivity in such thermal analysis equipment as described above.

Moreover, in the thermal analysis equipment it is important to keep the thermal time constant small and thereby improve the responsiveness of the sample with respect to the temperature control of a heat sink. Thus, the heat conduction from the furnace body to the sample needs to be kept high.

### SUMMARY OF THE INVENTION

The present invention has been be achieved in view of such circumstances, and is intended to provide a sensor unit of thermal analysis equipment capable of maintaining the heat conduction between a furnace body and the samples to detect a temperature difference between the samples with high sensitivity, while suppressing the heat conduction between a measurement sample and a reference sample, and a method of manufacturing the same.

(1) In order to achieve the above-described objectives, according to an aspect of a sensor unit of thermal analysis equipment concerning the present invention, the sensor unit of thermal analysis equipment that detects a temperature difference between a measurement sample and a reference sample in each sample container, the sensor unit comprising: a base part formed of an insulating material and provided in the vicinity of a temperature-controlled furnace unit; a multiple thermocouple formed by joining two kinds of thermocouple elements alternately, a particular part of the thermocouple element being joined to the base part; and a pair of heat sensitive parts, being formed of an insulating material, having a mounting surface on which the each sample container is mounted, and joining to element junctions of the multiple thermocouple, wherein the pair of heat sensitive parts are provided spaced apart from the base part. The above-described vicinity refers to the range in which thermal interaction occurs.

In this way, in the sensor unit of thermal analysis equipment of the present invention, the heat sensitive parts are provided spaced apart from the base part. Therefore, an appropriate thermal resistance is provided between the heat sensitive parts and the base part. Accordingly, if there is a change in the measurement sample, a steep temperature gradient will occur between the measurement sample and the reference sample and the thermal electromotive force will increase. As a result, the sensitivity and S/N ratio of the sensor will improve. Moreover, a temperature change in the sample can be detected with high sensitivity by preventing the heat transmitting to the heat sensitive part.

On the other hand, the base part and the heat sensitive part are connected via the multiple thermocouple. Accordingly, the multiple thermocouple can transmit heat from the base part to each heat sensitive part, so that the time constant of the sample temperature can be kept small. As a result, a change in the heat absorption, heat generation, or the like of the measurement sample can be detected satisfactorily.

(2) According to another aspect of the sensor unit of thermal analysis equipment concerning the present invention, the thermocouple elements are flat plate shaped and are overlaid and joined at element junctions of the multiple thermocouple. In this way, in the sensor unit of thermal analysis equipment of the present invention, since the multiple thermocouple formed of the flat plate shaped thermocouple elements is flat plate shaped, the ease of installation into the furnace body will improve.

(3) According to yet another aspect of the sensor unit of thermal analysis equipment concerning the present invention, the flat plate shaped thermocouple element has a bend bending in the width direction. Accordingly, even if the thermocouple element is flat plate shaped and thin, the thermocouple element is unlikely to bend in the thickness direction and can support the heat sensitive part satisfactorily. Moreover, since the thermocouple element is flat plate shaped, the thermocouple element is more immune to oxidization than the one made by binding together thin wires.

(4) According to yet another aspect of the sensor unit of thermal analysis equipment concerning the present invention, the multiple thermocouple includes four pairs of thermocouples. In this way, by using a plurality of thermocouples, the sensitivity of temperature detection of each sample is increased, while by suppressing the number of thermocouples a decrease in S/N ratio is suppressed. Moreover, by limiting the number of element junctions in the multiple thermocouple, the sensor unit is miniaturized and the ease of installation into the furnace body is improved.

(5) According to yet another aspect of the sensor unit of thermal analysis equipment concerning the present invention, the multiple thermocouple is formed by joining together a thermocouple element made of chromel and a thermocouple element made of constantan. With this combination, a highest voltage as the signal of a temperature difference can be obtained, and a small voltage change can be captured.

(6) According to yet another aspect of the sensor unit of thermal analysis equipment concerning the present invention, the element junctions of the multiple thermocouple are electrically independently joined to the heat sensitive part, respectively. Since each element junction is electrically independent, each element junction reflects the temperature of each element junction, thus improving the accuracy by the number of element junctions.

(7) According to yet another aspect of the sensor unit of thermal analysis equipment concerning the present invention, the heat sensitive part is formed of a ceramic having high heat conductivity. This improves the thermal conductivity between the sample and the element junction of the multiple thermocouple, allowing the temperature of the sample to be detected with high sensitivity.

(8) According to yet another aspect of the sensor unit of thermal analysis equipment concerning the present invention, the base part has a groove facing to the furnace unit to hold the thermocouple element into the surface. This allows the thermocouple element to be installed in the base part, so that the sensor can be made compact. Then, since the thermocouple elements are fixed to predetermined positions, the sensor unit can have a well-balanced and uniform structure. Moreover, the thermocouple element can be prevented from directly contacting the furnace unit.

Moreover, by means of the groove, a brazing filler metal for joining can be prevented from flowing from the inside of the groove. Then, since the groove is formed in the surface facing to the furnace unit, when the base part is in contact with the furnace unit the contact area with the furnace unit becomes small and thus a stress occurring between the furnace unit and the base part due to a thermal expansion can be reduced.

(9) According to yet another aspect of the sensor unit of thermal analysis equipment concerning the present invention, the groove of the base part has a respective depth corresponding to the material of the thermocouple element to be fitted thereinto. This allows the thermocouple element made of each material to be closely-attached to and installed into the groove of the base part.

(10) According to yet another aspect of the sensor unit of thermal analysis equipment concerning the present invention, the base part is formed in the shape of a long flat plate and has a side face that is depressed along the contour of the heat sensitive part. This improves the ease of installation into the furnace body of the sensor unit and at the same time separates the heat sensitive part from the base part.

(11) According to yet another aspect of the sensor unit of thermal analysis equipment concerning the present invention, at least one of a joint between the element junction of the multiple thermocouple and the heat sensitive part, a joint between the thermocouple elements of the multiple thermocouple at the element junction, and a joint between a particular part of the thermocouple element of the multiple thermocouple and the base part, is made by joining together metal layers formed in the surface of a joining member.

In this way, the joining of the sensor part is made by joining together the metal layers. Accordingly, the quantity of brazing filler metal to be used can be made substantially uniform between the measurement sample side and the reference sample side, thus allowing the joining at symmetric positions. As a result, between the measurement sample and the reference sample, a structural balance can be taken and a thermal symmetry can be obtained. Then, a structural influence can be eliminated to thereby capture a temperature change in the measurement sample.

(12) Moreover, a method of manufacturing the sensor unit of thermal analysis equipment concerning the present invention includes the steps of: forming two flat plates made of respectively different thermocouple materials into patterns used for a multiple thermocouple, the two flat plates; forming: a base part formed of an insulating material and arranged in the vicinity of a temperature-controlled furnace unit; a pair of heat sensitive parts that are formed of an insulating material and have a mounting surface on which each sample container is mounted; and a joining metal layer on the surface of a joining part of the two flat plates; overlaying the two patterned flat plates to make portions as element junctions of the multiple thermocouple closely-attached with each other, and then making the two flat plates be in close contact with the base part and pair of heat sensitive parts; and joining the two flat plates, base part, and pair of heat sensitive parts with the metal layers. The above-described vicinity refers to the range in which thermal interaction occurs.

Thus, in the method of manufacturing the sensor unit of the present invention, the joining is made by joining together the metal layers. Accordingly, the quantity of brazing filler metal to be used can be made substantially uniform between the measurement sample side and the reference sample side, and the joining can be made at symmetric positions. As a result, between the measurement sample and the reference sample, a structural balance can be taken and a thermal symmetry can be obtained. Then, a structural influence can be eliminated to thereby capture a temperature change in the measurement sample.

According to the present invention, when there is a change in the measurement sample, a steep temperature gradient will occur between the measurement sample and the reference sample, thus increasing the thermal electromotive force. As a result, the sensitivity and S/N ratio of the sensor will improve. Moreover, a temperature change in the sample can be detected with high sensitivity by preventing the heat transmitting to the heat sensitive part.

On the other hand, the multiple thermocouple can transmit heat from the base part to each heat sensitive part, and the time constant of sample temperature can be kept small. As a result, a change in the heat absorption and heat generation, and the like of the measurement sample can be detected satisfactorily.

### BRIEF DESCRIPTION OF THE DRAWINGS

Fig. 1 is a cross sectional view schematically showing thermal analysis equipment.

Fig. 2A is a plan view showing a sensor unit concerning the present invention, Fig. 2B is a front view showing the sensor unit concerning the present invention, and Fig. 2C is a bottom view showing the sensor unit concerning the present invention.

Fig. 3A is a plan view showing a base plate, Fig. 3B is a front view showing the base plate, and Fig. 3C is a bottom view showing the base plate.

Fig. 4 is a plan view showing a multiple thermocouple when viewed from a sample mounting side.

Fig. 5 is a perspective view showing a manufacturing process of the sensor unit concerning the present invention.

Fig. 6 is a perspective view showing an assembly process of the thermal analysis equipment.

### DETAILED DESCRIPTION OF THE INVENTION

### Best Modes for Carrying Out the Invention

Next, an embodiment of the present invention will be described with reference to the accompanying drawings. For ease of understanding of the description, in each drawing the same reference numeral is given to the same component, and the duplicating description is omitted.

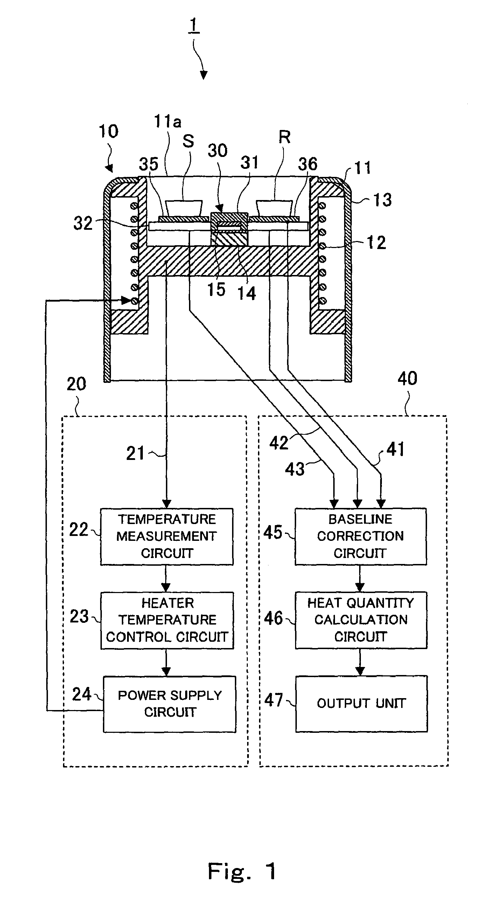

Fig. 1 is a cross sectional view schematically showing a thermal analysis equipment 1. The thermal analysis equipment 1 is the so-called heat flux DSC that detects a temperature difference between a measurement sample S and a reference sample R by controlling the temperature of a furnace unit 10, and outputs a heat flow difference. Other than this, the thermal analysis equipment 1 can be used also as a DTA that simply detects a temperature difference.

As shown in Fig. 1, the thermal analysis equipment 1 mainly includes the furnace unit 10, a furnace body temperature control circuit 20, a sensor unit 30, and an output circuit 40. The furnace unit 10 further has a furnace body 11, a heater wire 12, a furnace body cover 13, a sensor base 14, and an insulating sheet 15.

The furnace body 11 is made of silver and is symmetrical about the center axis, and the cross section thereof is H-shaped. Then, one concave space of the H-shape serves as a sample chamber 11a for installing a sample. The furnace body 11 transmits a heat transmitted from the heater wire 12 to the entire inside of the sample chamber. The heater wire 12 is wound around the furnace body 11 and generates heat to thereby heat the furnace body 11. The power supply to the heater wire 12 is adjusted by the furnace body temperature control circuit 20 described below to thereby control the heat generation.

The furnace body cover 13 is made of silver and has a cylindrical shape to cover the furnace body 11 and heater wire 12. The sensor base 14 is made of silver and has a long plate shape. The end face of the sensor base 14 has a circumferential face shape along the inner wall of the furnace body, and the sensor base 14 has, in the center thereof, side surfaces that are depressed inward along the outer peripheries of heat sensitive plates 35, 36 described later. The sensor base 14 is fixed with screws onto the bottom face of the sample chamber 11a in the furnace body 11. The insulating sheet 15 has the same contour as that of the upper surface of the sensor base 14, and is arranged covering the upper surface of the sensor base 14. In order to prevent the thermocouple element from being short-circuited to the silver-made sensor base 14, the insulating sheet 15 electrically isolates the both from each other. Moreover, if there is a sufficient gap between the bottom face of the base plate 31 and the thermocouple element, there is no need to provide the insulating sheet 15.

The furnace body temperature control circuit 20 has a furnace body temperature sensor 21, a temperature measurement circuit 22, a heater temperature control circuit 23, and a power supply circuit 24. As the furnace body temperature sensor 21, a thermocouple can be used, for example. The furnace body temperature sensor 21 sends a signal indicative of the temperature of the furnace body to the temperature measurement circuit 22. The temperature measurement circuit 22 outputs a signal from the furnace body temperature sensor 21 as a temperature value. The heater temperature control circuit 23 controls the power supply so that the furnace body temperature follows a set temperature pattern, with reference to the value of the obtained furnace body temperature. The power supply circuit 24 supplies power to the heater wire 12 under the control of the heater temperature control circuit 23. In this way, the furnace body temperature control circuit 20 controls the temperature of the furnace unit 10.

The sensor unit 30 has a base plate 31 (base part), a multiple thermocouple 32, a heat sensitive plate (heat sensitive part) 35 used for a measurement sample, and a heat sensitive plate (heat sensitive part) 36 used for a reference sample. The sensor unit 30 transmits heat from the furnace body 11 to the sample and also has the function to detect the temperature of the sample.

The base plate (base part) 31 is made of aluminium nitride and is long-plate shaped. The base plate 31 also has substantially the same contour as that of the sensor base 14. The base plate 31 features the shape of the groove and the like, which will be describes later. The base plate (base part) 31 is fixed with screws onto the sensor base 14 with the insulating sheet 15 interposed therebetween. Thus, the base plate 31 is in contact with the furnace unit 10, but a gap may be provided between the base plate 31 and the furnace unit 10. In either case, the base plate 31 is provided in the vicinity of the furnace unit 10. The vicinity refers to the range in which thermal interaction occurs.

Aluminium nitride used for the base plate 31 is an insulating material, and has such a high thermal conductivity as that of metal and is excellent in junction property with metal. As the material of the base plate 31, a ceramic with a high thermal conductivity is suitable, and the use of this increases the measurement sensitivity. In addition, as the ceramic with a high thermal conductivity, silicon carbide other than aluminium nitride is also suitable. In addition, the base plate 31 serves also as a heat sink, and by transmitting heat to each sample container, the both are placed under the thermally same condition.

The multiple thermocouple 32 is formed by alternately joining the elements made of two kinds of thermocouple materials, wherein four pairs of thermocouples are formed. As the two kinds of thermocouple materials, a combination of constantan-chromel that generates a high voltage with respect to a temperature difference is suitable. However, a combination of platinum-rhodium having a different component ratio of rhodium, a combination of platinum-platinum rhodium, a combination of Nisil-Nicrosil, a combination of alumel-chromel, a combination of constantan-iron, a combination of constantan-copper, and the like may be employed, and the combination is not limited.

Moreover, the multiple thermocouple 32 is formed by overlaying and joining flat plate shaped elements made of each thermocouple material at a element junction, thus producing a step due to the joint, but the multiple thermocouple 32 is substantially flat plate shaped. This improves the ease of installation into the furnace body 11. Moreover, the multiple thermocouple 32 is more immune to oxidization than the thin wire shaped one. In each element, a region (a particular part) overlapping with the base plate 31 is joined to the base plate 31. Due to this joint, the lower surface of the multiple thermocouple 32 is floated by the base plate 31, thus producing a gap between the same and the insulating sheet 15. Accordingly, the heat of the furnace body 11 is transmitted to the multiple thermocouple 32 from the joining part between the base plate 31 and the thermocouple element mainly via the base plate 31.

The pair of heat sensitive plates (heat sensitive parts) 35, 36 is a disk made of aluminium nitride, and in one principal surface thereof there is a mounting surface to mount each sample container. Then, to the other principal surface, the element junctions of the multiple thermocouple are electrically independently joined, respectively. Being electrically independent means not affecting potentials without interfering to each other. At least, each element junction is constituted so as not to conduct on the heat sensitive plates 35, 36. The heat sensitive plates 35, 36 are supported spaced apart from the base plate 31 by the multiple thermocouple 32. Accordingly, if there is an appropriate thermal resistance between the heat sensitive plates 35, 36 and the base plate 31 and there is a change in the measurement sample, a steep temperature gradient will occur between the measurement sample S and the reference sample R, thus increasing the thermal electromotive force. As a result, the sensitivity and S/N ratio of the sensor will improve. Moreover, a temperature change in the sample can be detected with high sensitivity by preventing the heat transmitting to the heat sensitive plates 35, 36.

On the other hand, the base plate 31 and the heat sensitive plates 35, 36 are connected by the multiple thermocouple 32. Accordingly, the multiple thermocouple 32 can transmit heat from the base plate 31 to the heat sensitive plates 35, 36 each, so that the time constant of sample temperature can be kept small. For example, a situation can be prevented, in which despite that a change in the measurement sample S has already finished a peak is subsequently detected because the response to the sample temperature is too slow. Since the base plate 31 and the heat sensitive plates 35, 36 are connected to each other by the multiple thermocouple, the sensor sensitivity will not be reduced. As a result, a change in the heat absorption, heat generation, or the like of the measurement sample S can be detected satisfactorily.

The heat of the base plate 31 is transmitted to each sample container via the multiple thermocouple 32 and heat sensitive plates 35, 36. On the other hand, the heat sensitive plates 35, 36 transmit a temperature change of the sample to the thermocouple with high sensitivity. As the material of the heat sensitive plates 35, 36, a ceramic with a high thermal conductivity is suitable. For example, silicon carbide other than aluminium nitride is also suitable.

The output circuit 40 has a thermocouple 41 used for a reference sample, lead lines 42, 43, a baseline correction circuit 45, a heat quantity calculation circuit 46, and an output unit 47. The output circuit 40 corrects a signal from the multiple thermocouple 32 and converts a temperature difference into a heat quantity, and outputs this on a screen, a paper, or the like.

The thermocouple 41 used for a reference sample is a thermocouple provided in the vicinity of the reference sample R, for the purpose of baseline correction. The thermocouple 41 used for a reference sample sends a signal of the temperature of the reference sample R to the baseline correction circuit 45. The lead lines 42, 43, with one end thereof being connected to the multiple thermocouple 32 and the other end being connected to the baseline correction circuit 45, send a temperature difference between both samples to the baseline correction circuit 45. The furnace body 11 has a hole opened, through which an alumina pipe is inserted, and the lead lines 42, 43 are connected to the baseline correction circuit 45 through this hole. The baseline correction circuit 45 corrects the baseline by subtracting from a temperature difference between the measurement sample S and the reference sample R a value obtained by multiplying the temperature value of the reference sample R by a suitable factor. The heat quantity calculation circuit 46 converts into a heat quantity (heat flow difference) the value of a temperature difference after the baseline is corrected. The output unit 47 is a display device or a printing device, for example, which displays the heat flow difference on a screen or prints the same on a paper. The thermal analysis equipment 1 is constituted in this manner, and especially the sensor unit 30 has a feature for increasing the sensitivity of temperature difference detection.

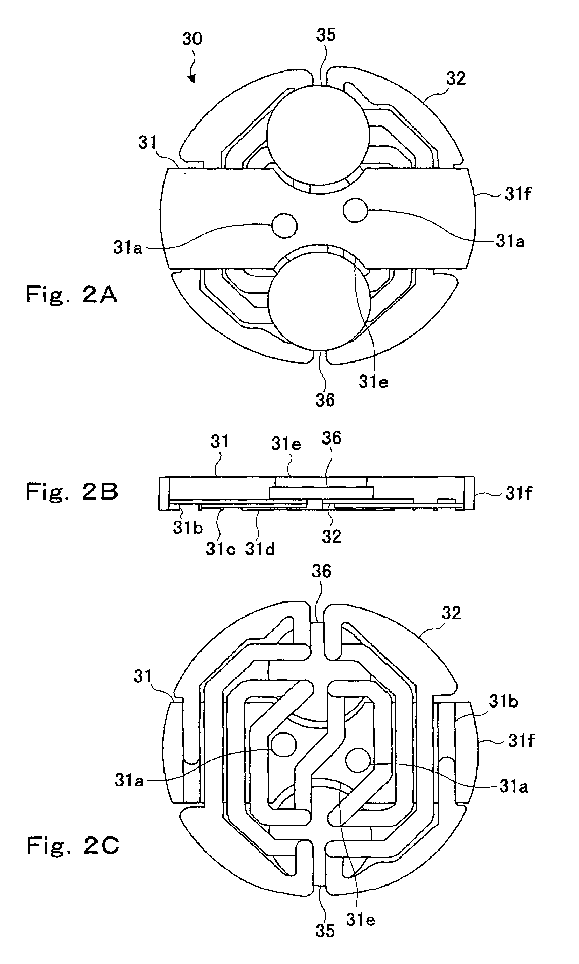

Fig. 2A is a plan view, 2B a front view, and 2C a bottom view showing the sensor unit 30. As shown in Fig. 2, the sensor unit 30 is formed by the multiple thermocouple 32 being joined to the base plate 31 and each the heat sensitive plates 35, 36. The sensor unit 30 is designed in a shape symmetrical between the measurement sample side and the reference sample side, and is structurally balanced. This provides a thermal symmetry and allows only the thermal behavior of the measurement sample S to be extracted and detected.

The base plate 31 and heat sensitive plates 35, 36 are arranged on the same side of the multiple thermocouple 32. However, the base plate 31 is not in contact with the heat sensitive plates 35, 36 and is arranged so that heat may not be directly transmitted from the base plate 31 to the heat sensitive plates 35, 36. The heat sensitive plates 35, 36 are formed thinner than the base plate 31, thus forming a suitable shape for temperature detection. Moreover, the multiple thermocouple 32 is fitted into grooves 31b, 31c of the base plate 31, producing a slight gap between the multiple thermocouple 32 and the furnace unit 10. As a result, the multiple thermocouple 32 separates the pair of heat sensitive plates 35, 36 from the furnace unit 10 and base plate 31, and supports the same.

Moreover, the sensor can be made compact because the thermocouple elements are installed into the base plate 31. Then, since the thermocouple elements are fixed to predetermined positions, it is possible to take a structural balance and form a uniform structure. In addition, if the heat transfer from the furnace unit 10 should be set high, the above-described gap may be eliminated to adhere the multiple thermocouple 32 and the furnace unit 10 to each other.

Moreover, by means of the grooves 31b, 31c, the brazing filler metal for joining in the groove can be prevented from flowing out. Moreover, a stress occurring between the furnace unit 10 and the base plate 31 due to thermal expansion can be reduced by reducing the contact area with the furnace unit 10 of a flat region 31d.

The contact faces between the multiple thermocouple 32 and the grooves 31b, 31c are joined with gold brazing filler metal. Among the respective thermocouple elements constituting the multiple thermocouple 32, for the thermocouple element at both ends, the end portion thereof is joined to the base part 31, and for the other thermocouple elements, the center portion thereof is joined to the base part 31. Moreover, four alternate element junctions of the multiple thermocouple are collected, respectively, and are joined to the heat sensitive plate 35 on the measurement sample side and to the heat sensitive plate 36 on the reference sample side.

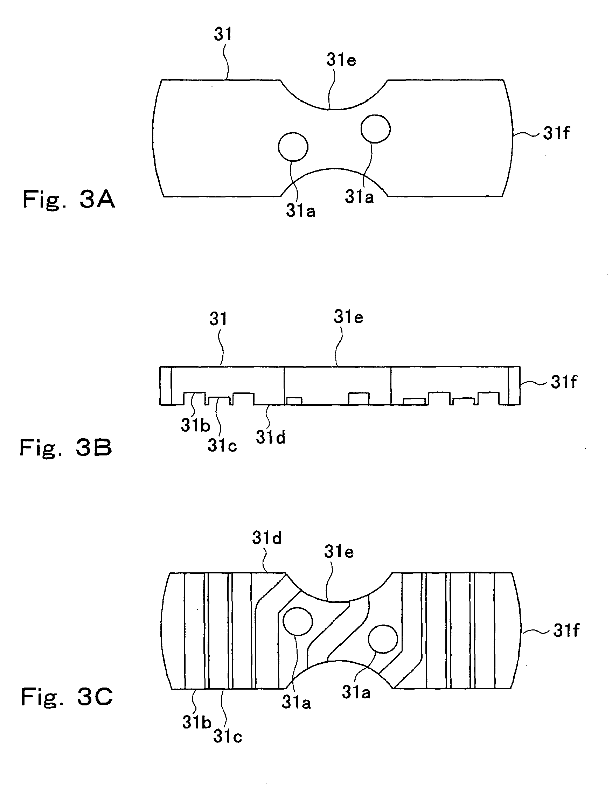

Fig. 3A is a plan view, Fig. 3B is a front view, and Fig. 3C is a bottom view showing the base plate 31. The base plate 31 has a screw hole 31a for fixing the whole sensor unit 30 to the sensor base 14. In the bottom face on the sensor base 14 side of the base plate 31, i.e., in the surface facing to the furnace unit 10, a deep groove 31b and a shallow groove 31c are formed alternately. This allows the thermocouple element made of each material to be adhered to and installed into the grooves 31b, 31c of the base plate 31. As a result, the sensor unit 30 can be made compact.

Corresponding to the depth of the groove, a thermocouple element made of a respective material is fitted therein. In the bottom face on the sensor base 14 side, the flat region 31d, in which the groove is not formed, is in contact with the insulating sheet 15, through which the heat of the furnace body 11 is transmitted. The base plate 31 has a constricted shape, with the center portion of the side face being depressed. The inwardly depressed side face 31e is formed with a radius of curvature slightly larger than that of the circumference along the circumference of the heat sensitive plates 35, 36, so that the base plate 31 and the heat sensitive plates 35, 36 will not contact to each other. This miniaturizes the sensor unit 30 to improve the ease of installation into the furnace body 11, and also separates the heat sensitive plates 35, 36 from the base plate 31. An end face 31f of the base plate 31 is circumferential-face shaped so as to be easily installed along the inner wall of the sample chamber 11a of the furnace body.

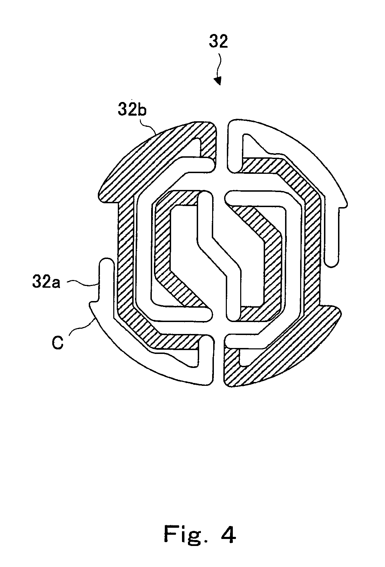

Fig. 4 is a plan view showing the multiple thermocouple 32 when viewed from the sample mounting side. The multiple thermocouple 32 is formed as four pairs of thermocouples by joining a thermocouple element made of constantan and a thermocouple element made of chromel alternately in series. The multiple thermocouple 32 is formed by overlaying and joining the flat-plate shaped thermocouple elements at a element junction. The lead line 42 is connected to the end portion of the thermocouple element at both ends. In this way, by using a plurality of thermocouples, the sensitivity of temperature detection of each sample is increased, while by suppressing the number of thermocouples a decrease in S/N ratio is suppressed. Moreover, by limiting the number of element junctions of the multiple thermocouple 32, the sensor unit 30 is miniaturized and the ease of installation into the furnace body 11 is improved.

The elements are spot welded together, or joined together using a brazing filler metal, such as gold. In Fig. 4, a difference in the materials is indicated by a difference between the white background and the hatched background. Among the overlaid thermocouple elements, the material of a thermocouple element 32a (white background) on the sample mounting side is constantan and the material of a thermocouple element 32b (hatched background) on the furnace body side is chromel. In addition, a combination of constantan and chromel is suitable, but not limited to this. Each element is not a flat plate extending straight in the longitudinal direction and has a bend section C bending in the width direction. Accordingly, even if the thermocouple element is flat plate shaped and thin, the thermocouple element is unlikely to bend in the thickness direction, thus making it easy to separate the heat sensitive plates 35, 36 from the furnace unit 10 and to support the same.

The heat sensitive plates 35, 36 are made of aluminium nitride and have a thin disc shape. In the opposite surface of the sample mounting surface of the heat sensitive plates 35, 36, a collection of four alternate element junctions of the multiple thermocouple 32 are joined with gold brazing filler metal, respectively. The sensor unit 30 is constructed in this manner.

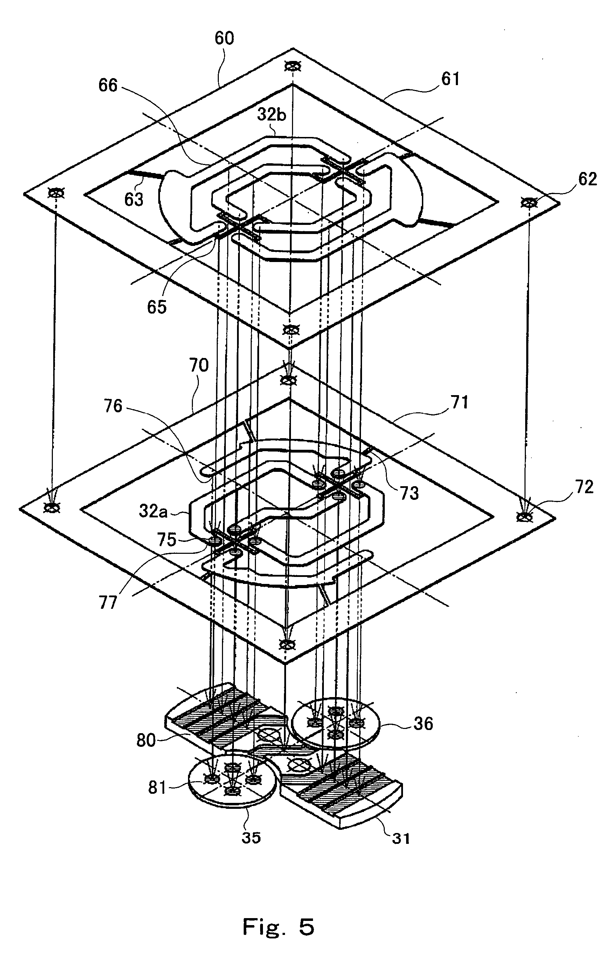

Next, the manufacturing process of the sensor unit 30 and the assembly process of the thermal analysis equipment 1 will be described. Fig. 5 is a perspective view showing the manufacturing process of the sensor unit 30.

First, two flat plates 60, 70 formed of each thermocouple material of chromel and constantan are formed in predetermined patterns by etching. The formation method is not limited to etching. The patterns remain in the shape of a punched-out flat plate, leaving outer frames 61, 71 of each flat plate and connection portions 63, 73 between the outer frame and the thermocouple elements 32b, 32a. Moreover, holes 62, 72 for alignment are opened at four corners of the outer frames 61, 71. This facilitates joining and assembling.

Subsequently, a joining metal layer is formed in the surface of a predetermined portion of two patterned flat plates 60, 70, base plate 31, and pair of heat sensitive plates 35, 36. The predetermined portion refers to: each contact surface 65, 75 of a portion where the thermocouple element 32b and the thermocouple element 32a form a element junction; contact surfaces 66, 76, and 80 between the thermocouple elements 32b, 32a and the base plate 31; and contact surfaces 77, 81 between the thermocouple element 32a and the heat sensitive plates 35, 36. In the thermocouple elements at both ends, the end portions thereof are adhered and joined to the base plate 31. For the thermocouple elements other than the ones at both ends, the central parts thereof are adhered and joined to the base plate 31. The respective four element junctions of the multiple thermocouple 32 are joined to the heat sensitive plates 35, 36. As the material of the metal layer, gold or silver is suitable, but not limited to this. Moreover, the metal layer may be formed by plating, vapor deposition, or the like, and the formation method is not limited in particular.

Next, two patterned flat plates 60, 70 are overlaid and adhered to the base plate 31 and pair of heat sensitive plates 35, 36. In overlaying, the holes 62, 72 at the corners of the outer frames 61, 71 are overlapped to carry out alignment. Then, a pressure is applied to the adhered portion, and the temperature is increased to a predetermined value for joining. In this way, by carrying out the metal layer formation processing and joining, each joining part becomes uniform. As a result, a thermal symmetry can be obtained between the measurement sample S and the reference sample R, and a structural influence can be eliminated to thereby capture a temperature change in the measurement sample. Finally, the outer frames 61, 71 of the flat plates 60, 70 made of thermocouple materials and the connection portions 63 and 73 are removed. In this manner, the sensor unit 30 can be prepared.

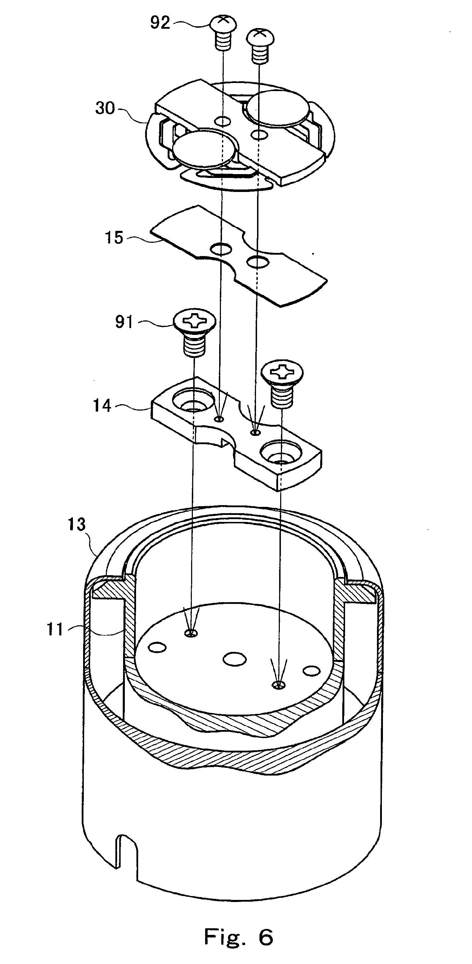

Moreover, the thermal analysis equipment 1 can be prepared by assembling the furnace unit 10 and the sensor unit 30 by fixing with screws. Fig. 6 is a perspective view showing the assembly process of the thermal analysis equipment 1. First, the sensor base 14 is fixed to the furnace body 11 with two screws 91. Then, the insulating sheet 15 is arranged on the sensor base 14, and the sensor unit 30 is overlaid thereon and is fixed with two screws 92. Thus, the thermal analysis equipment 1 can be assembled. In addition, the above-described jointing is carried out with screws, but other jointing means may be used.

Moreover, in the above-described embodiment, as the brazing filler metal for joining, gold is used, but other brazing filler metal such as silver or the like may be used. As the other brazing filler metals, the ones suitable for the metal layer formation processing or suitable for the surface material of the joint metal are preferable.

## Claims

1. A sensor unit of thermal analysis equipment that detects a temperature difference between a measurement sample and a reference sample in each sample container, the sensor unit comprising:
a base part formed of an insulating material and provided in the vicinity of a temperature-controlled furnace unit;
a multiple thermocouple formed by joining two kinds of thermocouple elements alternately, a particular part of said thermocouple element being joined to said base part; and
a pair of heat sensitive parts, being formed of an insulating material, having a mounting surface on which said each sample container is mounted, and joining to element junctions of said multiple thermocouple,
wherein said pair of heat sensitive parts are provided spaced apart from the base part.

2. The sensor unit of thermal analysis equipment according to claim 1, wherein said thermocouple elements are flat plate shaped and are overlaid and joined at the element junctions of said multiple thermocouple.

3. The sensor unit of thermal analysis equipment according to claim 2, wherein said flat plate shaped thermocouple element has a bend bending in the width direction.

4. The sensor unit of thermal analysis equipment according to any one of claims 1 to 3, wherein said multiple thermocouple includes four pairs of thermocouples.

5. The sensor unit of thermal analysis equipment according to any one of claims 1 to 4, wherein said multiple thermocouple is formed by joining together a thermocouple element made of chromel and a thermocouple element made of constantan.

6. The sensor unit of thermal analysis equipment according to any one of claims 1 to 5, wherein the element junctions of said multiple thermocouple are electrically independently joined to said heat sensitive part, respectively.

7. The sensor unit of thermal analysis equipment according to any one of claims 1 to 6, wherein said heat sensitive part is formed of a ceramic having high heat conductivity.

8. The sensor unit of thermal analysis equipment according to any one of claims 1 to 7, wherein said base part has a groove facing to said furnace unit to hold said thermocouple element into the surface.

9. The sensor unit of thermal analysis equipment according to claim 8, wherein the groove of said base part has a respective depth corresponding to the material of said thermocouple element to be fitted.

10. The sensor unit of thermal analysis equipment according to any one of claims 1 to 9, wherein said base part is formed in the shape of a long flat plate and has a side face that is depressed along the contour of said heat sensitive part.

11. The sensor unit of thermal analysis equipment according to any one of claims 1 to 10, wherein at least one of a joint between the element junction of said multiple thermocouple and said heat sensitive part, a joint between the thermocouple elements of said multiple thermocouple at said element junctions, and a joint between a particular portion of the thermocouple element of said multiple thermocouple and said base part, is made by joining together metal layers formed on the surface of a joining member.

12. A method of manufacturing a sensor unit of thermal analysis equipment, comprising the steps of:
forming two flat plates made of respectively different thermocouple materials into patterns used for a multiple thermocouple;
forming: a base part formed of an insulating material and arranged in the vicinity of a temperature-controlled furnace unit; a pair of heat sensitive parts that are formed of an insulating material and have a mounting surface on which each sample container is mounted; and
a joining metal layer on the surface of a joining part of said two flat plates;
overlaying said two patterned flat plates to make portions as element junctions of the multiple thermocouple closely-attached with each other, and then making said two flat plates be in close contact with said base part and pair of heat sensitive parts; and
joining said two flat plates, base part, and pair of heat sensitive parts with the metal layers.
